# EUROPÄISCHE PATENTSCHRIFT

(11) **EP 2 652 355 B1**
(45) Veröffentlichungstag und Bekanntmachung des Hinweises auf die Patenterteilung: **09.11.2016**
(21) Anmeldenummer: 11819055.2
(22) Anmeldetag: 17.11.2011
(51) Int. Cl.: F16F 15/14

(54) **FLIEHKRAFTPENDEL UND KUPPLUNGSSCHEIBE MIT DEMSELBEN**
CENTRIFUGAL FORCE PENDULUM AND CLUTCH DISC HAVING THE SAME
BALANCIER À FORCE CENTRIFUGE ET DISQUE D'ACCOUPLEMENT MUNI DE CELUI-CI

(30) Priorität: 15.12.2010 DE 102010054551
(43) Veröffentlichungstag der Anmeldung: 23.10.2013
(73) Patentinhaber: Schaeffler Technologies AG & Co. KG, 91074 Herzogenaurach (DE)
(72) Erfinder: RUSCH, Alain, 67170 Brumath (FR); HÄSSLER, Martin, 76676 Graben-Neudorf (DE); LEHMANN, Steffen, 76275 Ettlingen (DE)
(86) Internationale Anmeldenummer: PCT/DE2011/001997
(87) Internationale Veröffentlichungsnummer: WO 2012/079557

(56) Entgegenhaltungen:
- EP-A2- 1 780 434
- WO-A1-2010/105589
- WO-A1-2011/110150
- DE-A1- 3 643 272
- DE-A1- 4 426 317
- DE-A1- 19 726 532
- DE-A1- 19 752 667
- DE-A1-102006 028 552
- DE-A1-102009 039 076
- DE-A1-102010 005 599
- DE-C1- 19 631 989
- GB-A- 598 811

## Beschreibung

Die Erfindung betrifft ein Fliehkraftpendel mit einem Trägerflansch und zumindest einer Pendelmasse, die gegenüber dem Trägerflansch mittels auf Laufbahnen von im Trägerflansch und in den Pendelmassen vorgesehen Ausschnitten abwälzenden Wälzkörpern in Umfangsrichtung und radial begrenzt verschwenkbar angeordnet ist, sowie eine Kupplungsscheibe mit diesem.

Fliehkraftpendel werden in Antriebssträngen von Kraftfahrzeugen ausschließlich oder in Verbindung mit anderen Drehschwingungsisolationseinrichtungen wie Torsionsschwingungsdämpfern in Kupplungsscheiben oder in Zweimassenschwungrädern, Drehschwingungstilgern, Momentenregeleinrichtungen von Reibungskupplungen und dergleichen eingesetzt und sind beispielsweise aus der DE 10 2009 042 831 A1 bekannt. Gattungsgemäße Fliehkraftpendel sind aus einem bevorzugt um eine Drehachse einer Getriebeeingangswelle oder Kurbelwelle angeordneten Trägerflansch gebildet, an dem zumindest eine und bevorzugt mehrere über den Umfang verteilte, durch einen entsprechenden Bauraum begrenzte Pendelmassen angeordnet sind. Diese Pendelmassen führen im Feld der Zentrifugalbeschleunigung Schwingungen gegenüber dem Trägerflansch aus, wenn sie durch Drehzahlungleichförmigkeiten beispielsweise von Brennkraftmaschinen angeregt werden. Durch diese Schwingungen wird bei Abstimmung des Fliehkraftpendels über Pendellänge Wirkradius, Masse, Schwingwinkel und dergleichen auf eine bevorzugte Ordnung der auftretenden Erregerschwingungen phasenselektiv dem Antriebsstrang Energie entzogen und wieder zugeführt, so dass insgesamt eine Beruhigung des Antriebsstrangs herbeigeführt wird. Da im Allgemeinen sowohl die Eigenfrequenz der Fliehkraftpendelschwingung als auch die Erregerfrequenz proportional zur Drehzahl des Trägerflansches sind, wird über den gesamten Drehzahlbereich eine Tilgungswirkung des Fliehkraftpendels erzielt, so dass das Fliehkraftpendel als adaptiver Drehzahltilger eingesetzt werden kann.

Die Pendelmassen werden dabei gegenüber dem Trägerflansch auf im Wesentlichen kreisbogenförmigen Laufbahnen verlagert, die in Ausschnitte der Pendelmassen und des Träger flansches eingebracht sind. Jeweils zwei die Trägerflanschseiten flankierende, sich gegenüberliegende Pendelmassen bilden hierbei ein Pendelmassenpaar, das mittels eines auf Ausschnitten des Trägerflansches und der Pendelmassen abwälzender Wälzkörper wie Laufrollen verlagert wird. Dabei wird der Massenschwerpunkt der Pendelmassen beziehungsweise Pendelmassenpaare bei einer infolge Erregerschwingungen erzwungenen Auslenkung aus einer Nulllage nach radial innen verlagert und infolge Fliehkraft wieder in die Neutrallage verlagert, wobei sich der tilgende Effekt des Fliehkraftpendels einstellt. Hierbei führen die Massenschwerpunkte der Pendelmassen eine im Wesentlichen kreisbogenförmige Bewegung um den Pendelpunkt eines gedachten Fadenpendels aus.

Voraussetzung für eine befriedigende Tilgerwirkung ist neben der Abstimmung von Wirkradius und Pendellänge auf die Erregerordnung die Masse der Pendelmassen und deren Schwingwinkel. Insbesondere bei in Kupplungsscheiben integrierten Fliehkraftpendeln, wie sie beispielsweise aus der DE 10 2006 028 552 A1 bekannt sind, sind aufgrund der vorgegebenen Einbausituation der Verwendung hoher Pendelmassen und Schwingwinkel Grenzen gesetzt. Insbesondere im Bereich kleiner Drehzahlen mit hohen Anregungen, wie sie insbesondere bei Brennkraftmaschinen in Form von Dieselmotoren auftreten können, kann eine ausreichende Tilgungswirkung nur schwer mittels der bekannten Fliehkraftpendel bewirkt werden. Zum Teil muss vorgesehen werden, Ausschläge der Pendelmassen mit hohen Schwingwinkeln unter Komforteinbußen vorzusehen, indem zwischen den Pendelmassen und dem Trägerflansch harte oder aufwendig hergestellt weiche Anschläge vorgesehen werden.

Aufgabe der Erfindung ist daher, ein Fliehkraftpendel insbesondere für Kupplungsscheiben beziehungsweise eine Kupplungsscheibe mit einem Fliehkraftpendel vorzuschlagen, die vergrößerte Schwingwinkel ihrer Pendelmassen ermöglichen.

Die Aufgabe wird durch ein Fliehkraftpendel mit einem Trägerflansch und zumindest einer Pendelmasse, die gegenüber dem Trägerflansch mittels auf Laufbahnen von im Trägerflansch und in den Pendelmassen vorgesehen Ausschnitten abwälzenden Wälzkörpern in Umfangsrichtung und radial begrenzt verschwenkbar angeordnet ist, gelöst, wobei die zumindest eine Pendelmasse während einer Auslenkung gegenüber dem Trägerflansch unter Verdrehung um einen eigenen Massenschwerpunkt (S) in den Laufbahnen geführt ist.

Das vorgeschlagene Fliehkraftpendel eignet sich insbesondere für Antriebsstränge von Kraftfahrzeugen, wobei dieses ausschließlich oder in Verbindung mit anderen Einrichtungen des Antriebsstrangs, beispielsweise geteilten Schwungrädern wie Zweimassenschwungrädern, bevorzugt Kupplungsscheiben, Reibungskupplungen, Drehmomentwandlern, Elektromaschinen, Riemenscheiben oder Nebenaggregaten, Kurbelwellen eingesetzt und zu diesem Zweck in diese integriert sein kann. Je nach Ausführungsform kann dabei eine Pendelmasse beziehungsweise ein aus zwei gegenüberliegenden Pendelmassen gebildetes Pendelmassenpaar vorgesehen sein, das mit dem Trägerflansch ein Fliehkraftpendel bildet. Vorteilhaft ist jedoch die Anordnung von mehreren, über den Umfang verteilten Pendelmassen beziehungsweise Pendelmassenpaaren. Für ein in eine Kupplungsscheibe integriertes Fliehkraftpendel haben sich zwei bis drei über den Umfang verteilte Pendelmassen beziehungsweise Pendelmassenpaare infolge der begrenzten Bauraumverhältnisse bei kleinem Wirkungsradius radial innerhalb der Reibbeläge der Kupplungsscheibe als besonders vorteilhaft erwiesen.

Durch eine entsprechende Ausbildung der Laufbahnen zur Führung der Pendelmassen können Bewegungsformen der Pendelmassen bei Anregung erzwungen werden, die über die Bewegung der Pendelmassen auf einer einer Bewegung einer Masse an einem Fadenpendel entsprechenden Kreisbahn hinaus gehen. Vielmehr können durch Ausbildung der Laufbahnen beispielsweise Bewegungsformen entstehen, bei denen sich der Massenschwerpunkt der Pendelmasse entsprechend der Bewegung einer Masse eines Fadenpendels bewegt, wobei gleichzeitig die Pendelmasse um den Massenschwerpunkt rotiert. Durch die erzwungene Rotation bei großen Schwingwinkeln wird erreicht, dass die Pendelmassen bei großen Schwingwinkeln einen verringerten radialen Bauraum beanspruchen, indem die jeweilige in Pendelrichtung vorgelagerte Endseite der Pendelmasse während einer Auslenkung gleichzeitig rotativ nach radial innen eindreht.

Zur Darstellung einer erfindungsgemäßen symmetrischen Pendelbewegung der Pendelmasse(n) und einer Rotation um deren Massenschwerpunkt kann beispielsweise ein in Trapezform aufgehängtes und in kreisbogenförmigen Laufbahnen geführtes Massependel wie in der GB 598 811 A offenbart zugrunde gelegt werden. Um allerdings unter Ausführung der beabsichtigten Pendelmassenbewegung eine abwälzende Bewegung der Wälzkörper zu erzielen und durch kreisbogenförmige Laufbahnen bedingte Gleitbewegungen der Wälzkörper auf den Laufbahnen beziehungsweise ungewollte Pendelmassenbewegungen zu verhindern, wird eine Abrollbedingung festgelegt, aus der Laufbahnen resultieren, die bezüglich einer bei einer Nulllage der zumindest einen Pendelmasse parallel zu einer Mittellinie der Pendelmassen durch die Wälzkörper gezogenen Symmetrielinie asymmetrisch ausgebildet sind. Derartige Laufbahnen weisen einen komplizierten mathematischen Zusammenhang zwischen der Pendelbewegung einer Pendelmasse gegenüber dem Trägerflansch bei gleichzeitiger Rotationsbewegung um deren Massenschwerpunkt auf, der praktisch nur durch eine Freiform der Laufbahnen in der Pendelmasse und dem Trägerflansch abgebildet werden kann. Die Formen der Laufbahnen der Pendelmasse und des Trägerflansches unterscheiden sich in der Weise, dass diese im Gegensatz zu kreisbogen- oder parabelförmigen Formen nicht durch geometrische Operationen ineinander überführt werden können sondern jeweils eigene Freiformen bilden, die ausschließlich durch den Zusammenhang der Bewegungsgleichungen der Pendel- und Rotationsbewegung rechnerisch ermittelt werden können. Hingegen können infolge der Ausbildung einer symmetrischen Pendelbewegung des Massenschwerpunkts jeweils zwei in einer Pendelmasse und die zugehörigen im Trägerflansch vorgesehenen Laufbahnen an einer Mittelachse der Pendelachse gespiegelt werden.

Je nach Ausgestaltung der räumlichen Ausdehnung der Pendelmassen, deren Anzahl und Schwingwinkel kann es vorteilhaft sein, wenn umfangsseitige Endbereiche zweier in Umfangsrichtung benachbarter Pendelmassen radial überlagerbar vorgesehen sind. Dabei wird unter Ausnutzung der Teilrotation der Pendelmassen ein radiales Überlagern der Pendelmassen erzielt. Die Konturen der Endbereiche können dabei so ausgebildet sein, dass die Pendelmassen bei einer durch die Laufbahnen vorgegebenen Auslenkung unter Einhaltung eines geringen Spalts aneinander vorbeigleiten. Vorteilhafterweise können die Anschlagbereiche zweier benachbarter Pendelmassen flächig und zueinander komplementär ausgebildet sein.

Nach dem erfinderischen Gedanken können sich überlappende Endbereiche zweier benachbarter Pendelmassen sich unter Einhalten eines konstanten Spalts übergreifen und in Umfangsrichtung wirksame Anschlagbereiche bilden, so dass Anschläge zwischen den Pendelmassen und dem Trägerflansch und entsprechende, Bauraum erfordernde und den Trägerflansch schwächende Ausschnitte für Anschläge der Pendelmassen vermieden werden können. Um einen weichen Anschlag auszubilden, kann der Spalt sich mit zunehmender Auslenkung der Pendelmassen verringernd ausgebildet werden, so dass nach Aufbrauch des Spalts ein weicher Anschlag erzielt wird, indem sich die Pendelmassen tangential berühren. Im Sinne großer Schwingwinkel erfolgt ein Anschlag der Pendelmassen aneinander erst nach erfolgtem Überlappen der Endbereiche. Anschlagbereiche für in Umfangsrichtung benachbarte Pendelmassen sind daher innerhalb einer die Pendelmassen umfangsseitig begrenzenden Endseite vorgesehen.

Durch die vorgeschlagenen Ausführungsbeispiele kann der Schwingwinkel der Pendelmassen beziehungsweise der Pendelmassenpaare auf Winkel zwischen ± 50 und ±120°, bevorzugt ± 90° erweitert werden, so dass kleine Wirkdurchmesser der Pendelmassenanordnung beispielsweise in einer Kupplungsscheibe ausgeglichen und hohe Erregeramplituden insbesondere bei kleinen Drehzahlen dennoch in befriedigender Weise getilgt werden können.

Die Aufgabe der Erfindung wird im Weiteren durch eine Kupplungsscheibe mit zumindest zwei entgegen der Wirkung einer Federeinrichtung um eine gemeinsame Drehachse verdrehbaren Flanschteilen gelöst, wobei einem der Flanschteile Reibbeläge zugeordnet sind, und einem der Flanschteile zumindest ein vorgeschlagenes Fliehkraftpendel radial innerhalb der Reibbeläge wirksam zugeordnet ist. Dabei kann das Fliehkraftpendel der Eingangsseite der Kupplungsscheibe mit den Reibbelägen oder vorteilhafterweise der Ausgangsseite mit einer Nabe zur drehfesten Verbindung mit einer Getriebeeingangswelle wirksam zugeordnet sein. Dabei ist der Trägerflansch mit dem entsprechenden Flanschteil oder der Nabe drehfest verbunden wie vernietet, verstemmt, verschraubt, verrastet oder alternativ einteilig mit diesem ausgebildet.

An der erfindungsgemäßen Kupplungsscheibe ist bevorzugt ein Fliehkraftpendel mit zumindest einer, bevorzugt mehreren, gegebenenfalls beidseitig des Trägerflanschs angeordneten und zu Pendelmassenpaaren verbundenen Pendelmassen angeordnet. Hierbei können alle Pendelmassen unter entsprechender Ausbildung der Laufbahnen auf eine Ordnung auftretender Drehschwingungen ausgelegt sein. Alternativ kann zumindest eine Pendelmasse beziehungsweise ein Pendelmassenpaar auf eine erste Ordnung und zumindest eine weitere Pendelmasse oder Pendelmassenpaar auf eine zweite Ordnung abgestimmt sein. Ein entsprechender Masseunterschied kann durch entsprechendes Wuchten beispielsweise des Trägerflanschs ausgeglichen werden. Weiterhin können mehrere Trägerflansche axial benachbart und/oder beidseitig der Flanschteile der Kupplungsscheibe angeordnet sein, die auf eine oder mehrere Ordnungen von Drehschwingungen ausgelegt sind.

Die Erfindung wird anhand der in den Figuren 1 bis 11 dargestellten Ausführungsbeispiele näher erläutert. Dabei zeigen:
- Figur 1: einen Schnitt durch eine Kupplungsscheibe mit integriertem Fliehkraftpendel im Schnitt,
- Figur 2: eine Ansicht der Kupplungsscheibe der Figur 1 bei in Nulllage befindlicher Pendelmasse,
- Figur 3: eine Schrägansicht der Kupplungsscheibe der Figur 1,

- Figuren 4 bis 7: Ansichten des Fliehkraftpendels der Figuren 1 bis 3 bei unterschiedlichen Schwingwinkeln,
- Figur 8: einen Ausschnitt aus dem Trägerflansch des Fliehkraftpendels der Figuren 1 bis 6,
- Figur 9: einen Schnitt durch ein gegenüber dem Fliehkraftpendel der Figuren 1 bis 6 verändertes Fliehkraftpendel,
- Figur 10: eine geschnittene Ansicht des Fliehkraftpendels der Figur 8 und
- Figur 11: eine Schrägansicht des Fliehkraftpendels der Figuren 8 und 9.

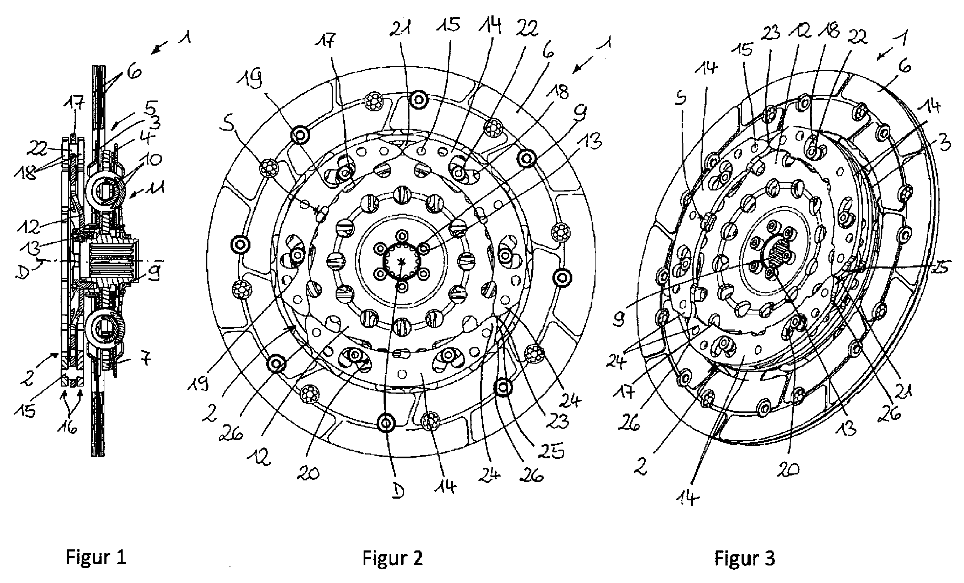

Die Figuren 1 bis 3 zeigen die Kupplungsscheibe 1 mit dem Fliehkraftpendel 2 im Schnitt, in Ansicht und in 3D-Schrägansicht. Diese enthält das aus den Flanschteilen 3, 4 gebildete Eingangsteil 5, wobei das Flanschteil 3 die Reibbeläge 6 trägt, und das aus dem Flanschteil 7 gebildete Ausgangsteil 8, das mittels der drehfest mit dem Flanschteil 7 verbundenen Nabe 9 mit einer Getriebeeingangswelle drehfest verbindbar ist. Eingangsteil 5 und Ausgangsteil 8 sind entgegen der Wirkung der aus den Schraubenfedern 10 gebildeten Federeinrichtung 11 begrenzt um die Drehachse D verdrehbar und bilden dabei einen Drehschwingungsdämpfer.

Das Fliehkraftpendel 2 ist dem Ausgangsteil 8 der Kupplungsscheibe 1 zugeordnet. Hierzu ist der Trägerflansch 12 des Fliehkraftpendels 2 mittels der Schrauben 13 drehfest mit der Nabe 9 verbunden und/oder mit diesem verstemmt. Beidseitig des Trägerflansches 12 sind an jeder Seite jeweils drei über den Umfang verteilte Pendelmassen 14 angeordnet, wobei jeweils axial gegenüberliegende Pendelmassen mittels Ausschnitte 21 des Trägerflansches 12 durchgreifender Verbindungsbolzen 15 zu Pendelmassenpaaren 16 verbunden sind.

Zur verschwenkbaren Anbindung der Pendelmassen 14 beziehungsweise Pendelmassenpaare 16 weisen die Pendelmassen 14 und der Trägerflansch 12 Ausschnitte 17, 18 mit Laufbahnen 19, 20 auf, auf denen jeweils ein axial gegenüber liegende Ausschnitte 17, 18 eines Pendelmassenpaares 16 und des Trägerflansches 12 durchgreifender und axial gesicherter Wälzkörper 22 wie Lagerrollen abwälzt. Durch die bezogen auf eine Nulllage asymmetrisch ausgebildeten Laufbahnen 19, 20 erfolgt während der Auslenkung der Pendelmassen 14 auf einer Kreisbahn des Massenschwerpunkts S eine Rotation der Pendelmassen 14 um ihren Massenschwerpunkt S, so dass die Pendelmassen 14 bei großen Auslenkungen an ihrem einen Ende nach radial innen ein- und an ihrem anderen Ende nach radial außen ausschwenken.

Die in Umfangsrichtung vorgesehenen Endseiten 23 der Pendelmassen 14 sind maximal unter Vermeidung von Kontakt aneinander angenähert und weisen Endbereiche 24 mit Endkonturen 25 auf, die bei einer Auslenkung der Pendelmassen jeweils radial einander unter Einhaltung eines minimalen Spalts überlappen. Die Endkonturen 25 folgen dabei im Wesentlichen dem von den Laufbahnen 19, 20 vorgegebenen Verlauf der Endbereiche 24 während einer Verlagerung und bilden - in Umfangsrichtung betrachtet- innerhalb der Endseiten 23 einer Pendelmasse 14 Anschläge 26 der Pendelmassen 14 untereinander in Umfangsrichtung, so dass die Auslenkung dieser untereinander und nicht durch Anschläge zwischen Trägerflansch 12 und Pendelmassen 14 bewirkt wird. Hierdurch können durch entsprechende Ausformung der Anschläge 26 beispielsweise mit Radial- und Umfangsanteilen weiche Anschläge 26 bewirkt werden, die bei einer Unterbringung zwischen Trägerflansch 12 und Pendelmassen 14 beispielsweise an den Verbindungsbolzen 15 große Ausschnitte 21 erfordern und daher am Trägerflansch 12 Bauraum- und Festigkeitsprobleme hervorrufen könnten.

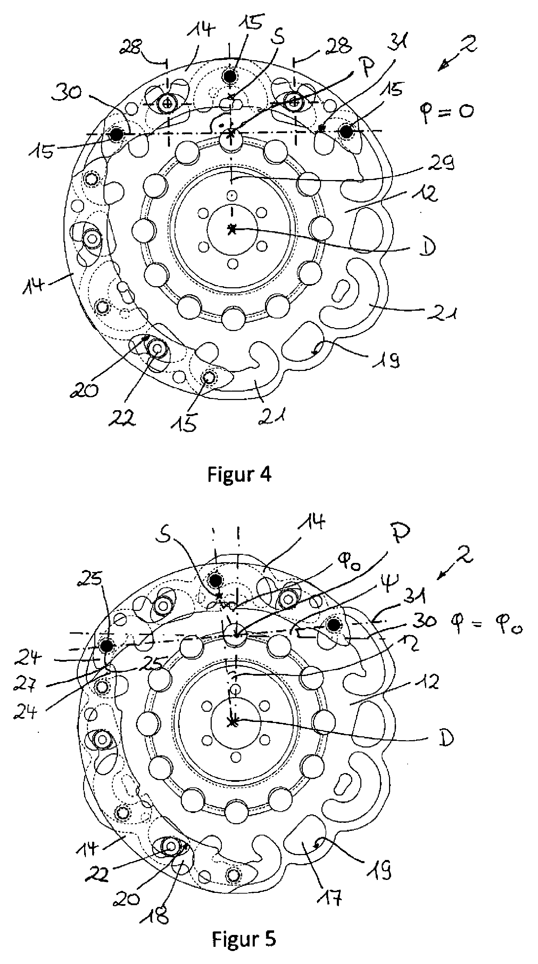

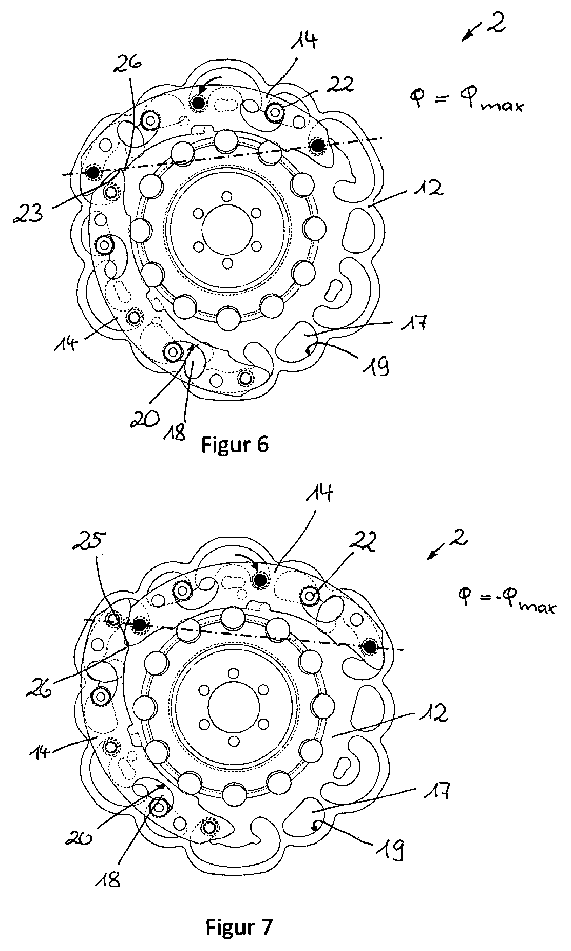

Die Figuren 4 bis 7 zeigen das Fliehkraftpendel 2 der Figuren 1 bis 3 in Ansicht bei verschiedenen Schwingwinkeln ϕ der Pendefmassen 14 gegenüber dem Trägerflansch 12, wobei zur besseren Einsicht auf den Trägerflansch 12 eine der drei über den Umfang verteilten und mit auf der Rückseite in gleicher Anzahl diesen gegenüberliegenden - nicht einsehbaren - Pendelmassenpaare bildende Pendelmassen 14 weggelassen ist. Dabei zeigt die Figur 4 das Fliehkraftpendel 2 in einer neutralen Position der Pendelmassen 14 gegenüber dem Trägerflansch 12, die Figur 5 in einer beispielhaften Arbeitsposition bei einer Auslenkung der Pendelmassen 14 gegenüber dem Trägerflansch 12 um den Schwingwinkel ϕ₀, die Figuren 6 und 7 die maximale Auslenkung der Pendelmassen 14 um den Schwingwinkel ϕₘₐₓ beziehungsweise -ϕₘₐₓ. Bei den maximalen Schwingwinkeln ϕₘₐₓ, -ϕₘₐₓ liegt jeweils die entsprechende Endseite 23 an dem zugehörigen Anschlag 26. Die Anschläge 26 wirken nur unter Grenzbelastung des Fliehkraftpendels 2, in den üblichen Arbeitspositionen überlagern sich entsprechend Figur 5 die Endebereiche 24 der benachbarten Pendelmassen 14 radial unter Bildung des minimalen Spalts 27 durch die Endkonturen 25.

Dabei wird der Spalt 27 durch entsprechende Ausbildung der Endkonturen 25 gebildet, indem diese der Bewegungskinematik der Pendelmassen 14 entlang der durch die Ausschnitte 17, 18 gebildeten Laufbahnen 19, 20 für die Wälzkörper 22 angepasst werden. Durch die zu der in Figur 4 dargestellten Symmetrieachsen 28 asymmetrisch ausgebildeten Laufbahnen 19, 20 wird in jede Auslenkrichtung von der kreisbahnförmigen Auslenkung abgewichen und zusätzlich eine Rotation um den Massenschwerpunkt S der Pendelmassen 14 eingeleitet. Die Form der durch die Symmetrieachsen 28 asymmetrisch ausgebildeten Laufbahnen 19, 20 kann an einem Teil als Kreisbahn und an der gegenüberliegenden Teillaufbahn als Kreisbahn als Freiform oder beidseitig als Freiform ausgebildet sein. Die Ausschnitte 21, in denen sich der Verbindungsbolzen 15 der gegenüberliegenden Pendelmassen 14 mit der Bewegung der Pendelmassen verlagert, sind der Bewegung der Pendelmassen mittig oder endseitig entsprechend in ihrer Form angepasst.

In dem in Figur 4 gezeigten Ausgangszustand des Fliehkraftpendels 2 mit einem Schwingwinkel ϕ=0 bilden Massenschwerpunkt S und Drehachse D eine Linie 29, auf der die Pendelachse P angeordnet ist. Weiterhin sind die Pendelmassen 14 nicht um den Massenschwerpunkt S verdreht, so dass die durch die endseitigen Verbindungsbolzen 15 gelegte Orthogonale 30 mit der Neigungslinie 31 der Pendelachse P zusammenfällt.

In Figur 5 ist eine Anregung des Fliehkraftpendels 2 durch Drehschwingungen mit einer relativen Verdrehung des Trägerflansches 12 um den Winkel η dargestellt. Hierbei werden die Pendelmassen 14 um die Pendelachse P um den Schwingwinkel ϕ₀ an einem beispielhaften Arbeitspunkt des Fliehkraftpendels 2 ausgelenkt. Durch die asymmetrische Ausbildung der Laufbahnen 19, 20 rotieren die Pendelmassen zudem um den von der Orthogonalen 30 und der Neigungslinie 31 eingeschlossenen Neigungswinkel ψ. Dieser nimmt mit zunehmendem Schwingwinkel ϕ zu, bis die Pendelmassen 14 gegenseitig bei den Schwingwinkeln -ϕₘₐₓ, ϕₘₐₓ an den Anschlägen 26 anschlagen (Figuren 6 und 7).

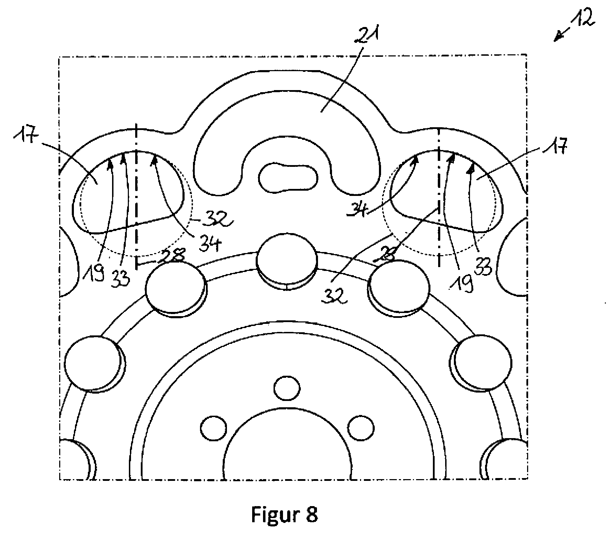

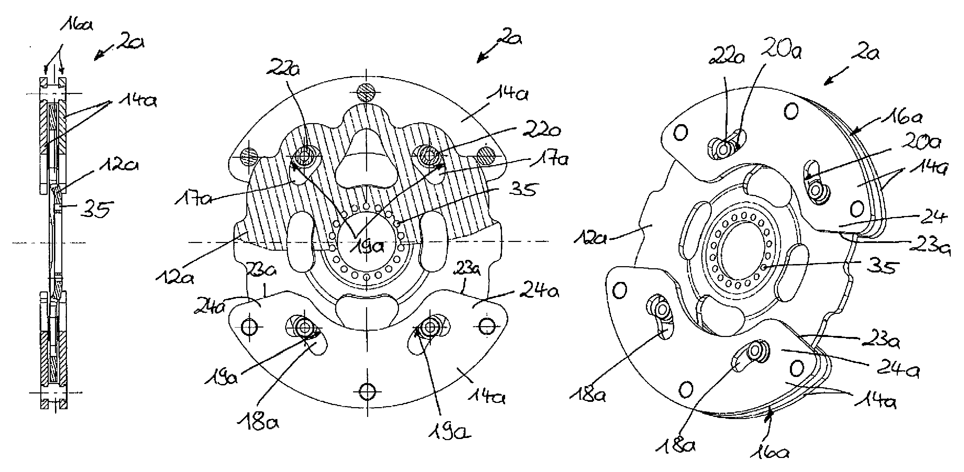

Figur 8 zeigt einen Ausschnitt aus dem Trägerflansch 12 des Fliehkraftpendels 2 der Figuren 1 bis 7 mit den Ausschnitten 17 für die Bildung der Laufbahnen 19 und dem zwischen diesen angeordneten Ausschnitt 21 für den Durchgriff der Verbindungsbolzen 15 (Figur 1). Die Laufbahnen 19 sind gegenüber den angedeuteten, symmetrisch zu den Symmetrieachsen 28 ausgebildeten Kreisbahnen 32 asymmetrisch ausgebildet, wobei die jeweils voneinander wegweisenden Laufbahnteile 33 einen Steigungsverlauf mit gegenüber den Kreisbahnen geringerer Steigung und die einander zugewandten Laufbahnteile 34 einen Steigungsverlauf mit höherer Steigung aufweisen. Die asymmetrischen Laufbahnen 19 und die asymmetrischen Laufbahnen 20 der Pendelmassen 14 (Figuren 1 bis 7), erzwingen die erfindungsgemäße Einstellung einer Rotation der Pendelmassen 14 bei einer Auslenkung der Pendelmassen 14 um vorgegebene Schwingwinkel, wobei durch die spezielle Form der Laufbahnen 19, 20 ausschließlich Wälzbewegungen der Wälzkörper 22 (Figur 1) auf den Laufbahnen 19, 20 erzielt und Gleitbewegungen vermieden werden.

Die Figuren 9 bis 11 zeigen ein gegenüber dem Fliehkraftpendel 2 der Figuren 1 bis 7 leicht abgeändertes Fliehkraftpendel 2a mit lediglich zwei über den Umfang angeordneten, aus den Pendelmassen 14a gebildeten Pendelmassenpaaren 16a. Über entsprechende asymmetrische, an den Ausschnitten 17a, 18a ausgebildete Laufbahnen 19a, 20a und in diesen abwälzende Wälzkörper 22a sind die Pendelmassen 14a an dem Trägerflansch 12a verschwenkbar aufgenommen. Der Trägerflansch 12a ist an der Kupplungsscheibe 1 der Figur 1 oder einer diesen ähnlichen Kupplungsscheibe mittels die Öffnungen 35 durchgreifender Schrauben oder Nieten drehfest aufgenommen. Infolge des Abstands der der Pendelmassen in Umfangsrichtung benachbarten Pendelmassen 14a zueinander können diese mit besonders hohem Schwingwinkel und nicht radial überlappend ausgebildet werden, so dass die Pendelmassen 14a mit hoher radialer Ausdehnung und nicht nötiger Einschränkung der Endbereiche 24a zur gegenseitigen Überlappung mit hoher Masse ausgestattet werden können. Infolgedessen können die Endseiten 23a der Pendelmassen 14a im Wesentlichen plan ausgebildet werden.

### Bezugszeichenliste

- 1: Kupplungsscheibe
- 2: Fliehkraftpendel
- 2a: Fliehkraftpendel
- 3: Flanschteil
- 4: Flanschteil
- 5: Eingangsteil
- 6: Reibbelag
- 7: Flanschteil
- 8: Ausgangsteil
- 9: Nabe
- 10: Schraubenfeder
- 11: Federeinrichtung
- 12: Trägerflansch
- 12a: Trägerflansch
- 13: Schrauben
- 14: Pendelmasse
- 14a: Pendelmasse
- 15: Verbindungsbolzen
- 16: Pendelmassenpaar
- 16a: Pendelmassenpaar
- 17: Ausschnitt
- 17a: Ausschnitt
- 18: Ausschnitt
- 18a: Ausschnitt
- 19: Laufbahn
- 19a: Laufbahn
- 20: Laufbahn
- 20a: Laufbahn
- 21: Ausschnitt
- 22: Wälzkörper
- 22a: Wälzkörper
- 23: Endseite
- 23a: Endseite
- 24: Endbereich
- 24a: Endbereich
- 25: Endkontur
- 26: Anschlag
- 27: Spalt
- 28: Symmetrieachse
- 29: Linie
- 30: Orthogonale
- 31: Neigungslinie
- 32: Kreisbahn
- 33: Laufbahnteil
- 34: Laufbahnteil
- 35: Öffnung
- η: Winkel
- ϕ: Schwingwinkel
- ϕ₀: Schwingwinkel
- ϕₘₐₓ: Schwingwinkel
- -ϕₘₐₓ: Schwingwinkel
- ψ: Neigungswinkel
- D: Drehachse
- P: Pendelachse
- S: Massenschwerpunkt

## Patentansprüche

1. Kupplungsscheibe (1) mit zumindest zwei entgegen der Wirkung einer Federeinrichtung (11) um eine gemeinsame Drehachse (D) verdrehbaren eingangsseitigen und ausgangsseitigen Flanschteilen (3, 4, 7), wobei einem der Flanschteile (3) Reibbeläge (6) zugeordnet sind, und wobei einem der Flanschteile (7) zumindest ein Fliehkraftpendel (2, 2a) mit einem Trägerflansch (12, 12a) und zumindest einer Pendelmasse (14, 14a), die gegenüber dem Trägerflansch (12, 12a) mittels auf Laufbahnen (19, 19a, 20, 20a) von im Trägerflansch (12, 12a) und in den Pendelmassen (14, 14a) vorgesehen Ausschnitten (17, 17a, 18, 18a) abwälzenden Wälzkörpern (22, 22a) in Umfangsrichtung und radial begrenzt verschwenkbar angeordnet ist, radial innerhalb der Reibbeläge (6) wirksam zugeordnet ist, wobei die zumindest eine Pendelmasse (14, 14a) während einer Auslenkung gegenüber dem Trägerflansch (12, 12a) unter Verdrehung um einen eigenen Massenschwerpunkt (S) in den Laufbahnen (19, 19a, 20, 20a) geführt ist.

2. Kupplungsscheibe (1) nach Anspruch 1, **dadurch gekennzeichnet, dass** der Trägerflansch (12, 12a) mit dem Flanschteil (7) oder mit einer mit diesem drehfest verbundenen Nabe (9) der Kupplungsscheibe (1) drehfest verbunden ist.

3. Kupplungsscheibe nach einem der Ansprüche 1 oder 2, **dadurch gekennzeichnet, dass** zumindest ein Trägerflansch (12, 12a) mit zumindest einer auf eine Ordnung einer Drehschwingung abgestimmter Pendelmasse (14, 14a) vorgesehen ist.

4. Kupplungsscheibe nach einem der Ansprüche 1 bis 3, **dadurch gekennzeichnet, dass** die Laufbahnen (19, 19a, 20, 20a) bezüglich einer bei einer Nulllage der zumindest einen Pendelmasse (14, 14a) parallel zu einer Mittellinie dieser durch die Wälzkörper (22, 22a) gezogenen Symmetrielinie (28) asymmetrisch ausgebildet sind.

5. Kupplungsscheibe nach einem der Ansprüche 1 bis 4, **dadurch gekennzeichnet, dass** die Laufbahnen (19, 19a, 20, 20a) eine Freiform aufweisen.

6. Kupplungsscheibe nach einem der Ansprüche 1 bis 5, **dadurch gekennzeichnet, dass** eine Form der Laufbahnen (19, 19a) des Trägerflansches (12, 12a) nicht mittels geometrischer Operationen einer Form der Laufbahnen (19, 19a) des Trägerflansches (12, 12a) abbildbar ist.

7. Kupplungsscheibe nach einem der Ansprüche 1 bis 6, **dadurch gekennzeichnet, dass** umfangsseitige Endbereiche (24) zweier in Umfangsrichtung benachbarter Pendelmassen (14) radial überlagerbar vorgesehen sind.

8. Kupplungsscheibe nach Anspruch 7, **dadurch gekennzeichnet, dass** die Endbereiche (24) zumindest einen Anschlag (26) für zumindest eine in Umfangsrichtung benachbarte Pendelmasse innerhalb einer umfangsseitigen Endseite (23) aufweisen.

9. Kupplungsscheibe nach einem der Ansprüche 7 oder 8, **dadurch gekennzeichnet, dass** die Anschläge (26) zweier benachbarter Pendelmassen (14) flächig und zueinander komplementär ausgebildet sind.

10. Kupplungsscheibe nach einem der Ansprüche 7 bis 9, **dadurch gekennzeichnet, dass** sich überlappende Endbereiche (24) zweier benachbarter Pendelmassen (14) sich unter Einhalten eines konstanten Spalts (27) übergreifen und in Umfangsrichtung wirksame Anschläge (26) vorgesehen sind.

11. Kupplungsscheibe nach einem der Ansprüche 1 bis 10, **dadurch gekennzeichnet, dass** ein Schwingwinkel (ϕ) der zumindest einen Pendelmasse (14, 14a) zwischen ± 50° und ±120°, bevorzugt ± 90° beträgt.

## Claims

1. Clutch plate (1) having at least two input-side and output-side flange parts (3, 4, 7) which can be rotated about a common rotational axis (D) counter to the action of a spring device (11), one of the flange parts (3) being assigned friction linings (6), and one of the flange parts (7) being assigned, in a manner which is active radially within the friction linings (6), at least one centrifugal force pendulum (2, 2a) with a carrier flange (12, 12a) and at least one pendulum mass (14, 14a) which is arranged such that it can be pivoted in the circumferential direction and to a radially limited extent with respect to the carrier flange (12, 12a) by means of rolling bodies (22, 22a) which roll on raceways (19, 19a, 20, 20a) of cut-outs (17, 17a, 18, 18a) which are provided in the carrier flange (12, 12a) and in the pendulum masses (14, 14a), the at least one pendulum mass (14, 14a) being guided in the raceways (19, 19a, 20, 20a) during a deflection with respect to the carrier flange (12, 12a) with rotation about its own centre of mass (S).

2. Clutch plate (1) according to Claim 1, **characterized in that** the carrier flange (12, 12a) is connected fixedly to the flange part (7) or to a hub (9) of the clutch plate (1) so as to rotate with it, which hub (9) is connected fixedly to the said flange part (7) so as to rotate with it.

3. Clutch plate according to either of Claims 1 and 2, **characterized in that** at least one carrier flange (12, 12a) is provided with at least one pendulum mass (14, 14a) which is adapted to the order of a torsional vibration.

4. Clutch plate according to one of Claims 1 to 3, **characterized in that** the raceways (19, 19a, 20, 20a) are of asymmetrical configuration with regard to a line of symmetry (28) which, in the case of a zero position of the at least one pendulum mass (14, 14a), is drawn parallel to a centre line of the latter through the rolling bodies (22, 22a).

5. Clutch plate according to one of Claims 1 to 4, **characterized in that** the raceways (19, 19a, 20, 20a) have a free shape.

6. Clutch plate according to one of Claims 1 to 5, **characterized in that** a shape of the raceways (19, 19a) of the carrier flange (12, 12a) cannot be mapped by means of geometric operations of a shape of the raceways (19, 19a) of the carrier flange (12, 12a).

7. Clutch plate according to one of Claims 1 to 6, **characterized in that** circumferential-side end regions (24) of two pendulum masses (14) which are adjacent in the circumferential direction are provided such that they can be overlapped radially.

8. Clutch plate according to Claim 7, **characterized in that** the end regions (24) have at least one stop (26) for at least one pendulum mass adjacent in the circumferential direction within a circumferential-side end side (23).

9. Clutch plate according to either of Claims 7 and 8, **characterized in that** the stops (26) of two adjacent pendulum masses (14) are configured such that they are flat and complementary with respect to one another.

10. Clutch plate according to one of Claims 7 to 9, **characterized in that** overlapping end regions (24) of two adjacent pendulum masses (14) overlying one another while maintaining a constant gap (27), and stops (26) which are active in the circumferential direction are provided.

11. Clutch plate according to one of Claims 1 to 10, **characterized in that** a vibrating angle (ϕ) of the at least one pendulum mass (14, 14a) is between ±50° and ±120°, preferably ±90°.

## Revendications

1. Disque d'embrayage (1) comprenant au moins deux parties de bride (3, 4, 7) du côté de l'entrée et du côté de la sortie, pouvant tourner autour d'un axe de rotation commun (D) à l'encontre de l'action d'un dispositif de ressort (11), des garnitures de friction (6) étant associées à l'une des parties de bride (3) et à l'une des parties de bride (7) étant associé, de manière active radialement à l'intérieur des garnitures de friction (6), au moins un balancier à force centrifuge (2, 2a) avec une bride de support (12, 12a) et au moins une masse de balancier (14, 14a), qui est disposée par rapport à la bride de support (12, 12a) de manière à pouvoir pivoter dans la direction périphérique et de manière limitée radialement au moyen de corps de roulement (22, 22a) roulant sur des chemins de roulement (19, 19a, 20, 20a) de sections (17, 17a, 18, 18a) prévues dans la bride de support (12, 12a) et dans les masses de balancier (14, 14a), l'au moins une masse de balancier (14, 14a), pendant une déviation par rapport à la bride de support (12, 12a), étant guidée par rotation autour d'un centre de gravité de masse propre (S) dans les chemins de roulement (19, 19a, 20, 20a).

2. Disque d'embrayage (1) selon la revendication 1, **caractérisé en ce que** la bride de support (12, 12a) est connectée de manière solidaire en rotation à la partie de bride (7) ou à un moyeu (9) du disque d'embrayage (1) connecté de manière solidaire en rotation à celle-ci.

3. Disque d'embrayage selon l'une quelconque des revendications 1 ou 2, **caractérisé en ce qu'**au moins une bride de support (12, 12a) est pourvue d'au moins une masse de balancier (14, 14a) adaptée à un ordre d'oscillations de torsion.

4. Disque d'embrayage selon l'une quelconque des revendications 1 à 3, **caractérisé en ce que** les chemins de roulement (19, 19a, 20, 20a) sont réalisés de manière asymétrique par rapport à un axe de symétrie (28) tracé parallèlement à un axe médian de la masse de balancier par les corps de roulement (22, 22a) dans le cas d'une position nulle de l'au moins une masse de balancier (14, 14a) .

5. Disque d'embrayage selon l'une quelconque des revendications 1 à 4, **caractérisé en ce que** les chemins de roulement (19, 19a, 20, 20a) présentent une forme libre.

6. Disque d'embrayage selon l'une quelconque des revendications 1 à 5, **caractérisé en ce qu'**une forme des chemins de roulement (19, 19a) de la bride de support (12, 12a) ne peut pas être reproduite au moyen d'opérations géométriques d'une forme des chemins de roulement (19, 19a) de la bride de support (12, 12a).

7. Disque d'embrayage selon l'une quelconque des revendications 1 à 6, **caractérisé en ce que** des régions d'extrémité (24) du côté de la périphérie de deux masses de balancier (14) adjacentes dans la direction périphérique sont prévues de manière à pouvoir être superposées radialement.

8. Disque d'embrayage selon la revendication 7, **caractérisé en ce que** les régions d'extrémité (24) présentent au moins une butée (26) pour au moins une masse de balancier adjacente dans la direction périphérique à l'intérieur d'un côté d'extrémité (23) du côté de la périphérie.

9. Disque d'embrayage selon l'une quelconque des revendications 7 ou 8, **caractérisé en ce que** les butées (26) de deux masses de balancier adjacentes (14) sont réalisées sous forme plane et complémentaire l'une de l'autre.

10. Disque d'embrayage selon l'une quelconque des revendications 7 à 9, **caractérisé en ce que** des régions d'extrémité (24) se chevauchant de deux masses de balancier adjacentes (14) viennent en prise l'une au-dessus de l'autre en conservant une fente constante (27) et des butées (26) agissant dans la direction périphérique sont prévues.

11. Disque d'embrayage selon l'une quelconque des revendications 1 à 10, **caractérisé en ce qu'**un angle d'oscillation (ϕ) de l'au moins une masse de balancier (14, 14a) est compris entre ± 50° et ± 120°, de préférence vaut ± 90°.
